# EUROPÄISCHE PATENTANMELDUNG

(11) **EP 1 995 007 A1**
(43) Veröffentlichungstag der Anmeldung: **26.11.2008**
(21) Anmeldenummer: 08104009.9
(22) Anmeldetag: 19.05.2008
(51) Int. Cl.: B23B 27/16, B23C 5/22

(54) **Plattensitz mit Einlegestücken**

(30) Priorität: 22.05.2007 DE 102007024109
(71) Anmelder: CeramTec AG, 73207 Plochingen (DE)
(72) Erfinder: Zitzlaff, Wolfgang, 73230 Kirchheim/Teck (DE); Eder, Otto, 73257 Köngen (DE)
(74) Vertreter: Uppena, Franz

(57) **Zusammenfassung**

Die Erfindung betrifft ein Trägerwerkzeug (2) zur Aufnahme von Schneidplatten (3) zur spanabhebenden Bearbeitung von metallischen Werkstücken, mit einer als Plattensitz (1) ausgebildeten Ausnehmung mit Plattensitzwänden (5) und einem Plattensitzboden (8) zur Aufnahme der Schneidplatte (3), wobei die Schneidplatte (3) Seitenflächen (11) aufweist, die im Einbauzustand der Schneidplatte (3) auf dem Trägerwerkzeug (2) parallel zu den Plattensitzwänden (5) angeordnet sind und die Schneidplatte (3) durch Spannmittel (9) im Plattensitz (1) befestigbar ist

Zur Verlängerung der Lebensdauer des Trägerwerkzeugs wird vorgeschlagen, dass zumindest zwischen einer Plattensitzwand (5) und einer Seitenfläche (11) der Schneidplatte (3) ein austauschbares Einlegestück (4) angeordnet ist.

## Beschreibung

Die Erfindung betrifft ein Trägerwerkzeug zur Aufnahme von Schneidplatten zur spanabhebenden Bearbeitung von metallischen Werkstücken, mit einer als Plattensitz ausgebildeten Ausnehmung mit Plattensitzwänden und einem Plattensitzboden zur Aufnahme der Schneidplatte, wobei die Schneidplatte Seitenflächen aufweist, die im Einbauzustand der Schneidplatte auf dem Trägerwerkzeug parallel zu den Plattensitzwänden angeordnet sind und die Schneidplatte durch Spannmittel im Plattensitz befestigbar ist.

Die Erfindung beschreibt einen neuartigen Plattensitz in Trägerwerkzeugen aller Art (Klemmhalter, Bohrstangen, Systemwerkzeuge, Fräser), welcher zur Aufnahme von Schneidkörpern, bzw. Schneidplatten oder Wendeschneidplatten dient.

Nach dem Stand der Technik, wie er zum Beispiel in der EP 0 075 177 A1 beschrieben ist, werden zur Zerspanung von meist metallischen Werkstoffen Trägerwerkzeuge mit darauf befindlichen Schneidplatten oder Wendeschneidplatten genutzt. Dabei wird die Schneidplatte durch ein Spannmittel, in der 0 075 177 A1 durch eine Spannpratze, in einer als Plattensitz ausgebildeten Ausnehmung befestigt. Die Schneidplatte liegt dabei mit zwei Seitenflächen an den Plattensitzwänden der Ausnehmung an. Die Unterseite der Schneidplatte sitzt auf einem Plattensitzboden der Ausnehmung auf. Es ist auch bekannt, zwischen dem Plattensitzboden und der Schneidplatte eine Schneidkörperunterlage anzuordnen. Der Plattensitzboden für die Schneidplatte ist dann die Oberseite der Schneidkörperunterlage.

Die Plattensitzwände halten die Schneidplatte in ihrer Position und nehmen die beim Zerspanungsvorgang entstehen Schnittkräfte auf. Beim Abtragen von Material durch das definierte Eindringen der Schneidplattenkante in eine Werkstückoberfläche, entstehen hohe Schnittkräfte und Wärme. Diese Schnittkräfte und Wärme wirken auf die Schneidplatte ein und übertragen sich auf die Berührungsflächen im Plattensitz. Das ganze Spannsystem ist also permanent wechselnden Kräften und Wärme ausgesetzt, welches dadurch nur einer bestimmten Lebensdauer unterliegt. Die Schneidplatte wird üblicherweise nach einer vorbestimmten Standzeit gedreht und/oder gewendet, je nach Anzahl der Schneidecken mehrfach, bis sie letztendlich durch eine neue Schneidplatte ersetzt wird.

Nach einer gewissen Einsatzzeit tritt Verschleiß am Plattensitzboden bzw. an der Schneidkörperunterlage und an den Plattensitzwänden selbst auf. Die Schneidkörperunterlage ist meist auch leicht austauschbar, die Plattensitzwände sind jedoch nicht auswechselbar. Verschleiß durch Deformation, Abrieb durch Mikroschwingungen oder ähnliches führen nach gewisser Zeit zwangsläufig zum Austausch des Trägerwerkzeuges. Dieses muss dann verschrottet werden.

Oftmals kann auch durch Auftragsschweißen und Plattensitznacharbeit ein Trägerwerkzeug wieder einsatzfähig gemacht werden. Die Genauigkeit und Materialfestigkeit des ursprünglichen Werkzeuges kann meist nicht wieder hergestellt werden, zudem ist die Nacharbeitsaktion auch mit hohen Kosten verbunden und kann auch oftmals nicht vom Anwender selbst, sondern nur von einem auf Werkzeugnacharbeit spezialisierten Fachbetrieb durchgeführt werden.

Der Erfindung liegt die Aufgabe zugrunde, die Lebensdauer eines Trägerwerkzeuges nach dem Oberbegriff des Anspruch 1 zu verlängern.

Erfindungsgemäß wird diese Aufgabe dadurch gelöst, dass zumindest zwischen einer Plattensitzwand und einer Seitenfläche der Schneidplatte ein austauschbares Einlegestück angeordnet ist. Wenn die Einlegestücke verschlissen sind, werden sie entweder wieder aufgearbeitet oder gegen neue ausgetauscht. Durch diese austauschbaren Einlegestücke ist der Plattensitz und somit das gesamte Trägerwerkzeug besser vor Verschleiß geschützt. Durch die Verwendung dieser Einlegestücke wird die Prozessfähigkeit des Trägerwerkzeuges verlängert und verbessert. Die dadurch verlängerte Lebensdauer führt zu einem effizienteren Einsatz des Trägerwerkzeuges und damit zu einer höheren Wirtschaftlichkeit.

In bevorzugter erfinderischer Ausgestaltung ist zwischen jeder Plattensitzwand und Seitenfläche der Schneidplatte ein Einlegestück angeordnet. Da in der Regel die Schneidplatte mit zwei Seitenflächen an zwei Plattensitzwänden angrenzt, werden bevorzugt auch je Trägerwerkzeug zwei Einlegestücke verwendet.

In einer Ausgestaltung ist das Einlegestück mit der Plattensitzwand verschraubt. Hierzu weist in einer Ausführungsform das Trägerwerkzeug in der Plattensitzwand eine Gewindebohrung und das Einlegestück eine durchgehende Bohrung zur Aufnahme einer Befestigungsschraube auf. Die Befestigung kann auch über eine Stiftbefestigung erfolgen. Bei einer Verschraubung lassen sich vorteilhaft Senkschrauben verwenden. Das Trägerwerkzeug hat in der Plattensitzwand eine geeignete Bohrung mit Gewinde zur Aufnahme der benötigten Befestigungsschraube.

In einer alternativen Ausgestaltung weist das Einlegestück Auskragungen und/oder Einbuchtungen auf, die in entsprechende Anpassungen in der Plattensitzwand und/oder den Plattensitzboden formschlüssig eingreifen und im montierten Zustand der Schneidkörperunterlage auf dem Trägerwerkzeug ein Herausfallen des Einlegestücks verhindern. Im eingebauten Zustand der Schneidplatte hält diese die Einlegestücke fest in der Ausnehmung. Das Einlegestück wird dadurch bei eingebauter Schneidplatte am ungewollten Herausrutschen gehindert.

Bei Verwendung einer Schneidkörperunterlage zwischen dem Plattensitzboden in der Ausnehmung bzw. im Plattensitz und der Unterseite der Schneidplatte ist die zur Schneidplatte gewandte Oberseite der Schneidkörperunterlage der Plattensitzboden für die Schneidplatte.

In einer erfinderischen Ausgestaltung sind die Auskragungen am Einlegestück im Wesentlichen senkrecht zur Anlagefläche des Einlegestücks verlaufende Schenkel.

In einer Ausführungform erstreckt sich ein erster Schenkel im Wesentlichen über die Höhe der Ausnehmung.

Vorteilhaft ist ein zweiter Schenkel zum ersten Schenkel spiegelbildlich und um 90° gedreht am Einlegestück angeordnet und erstreckt sich entlang der Tiefe der Ausnehmung.

Wie schon ausgeführt greifen die Auskragungen bevorzugt in entsprechende Anpassungen in der Plattensitzwand und/oder den Plattensitzboden formschlüssig ein. In einer Ausgestaltung ist im Bereich der inneren Ecke der Ausnehmung als Anpassung eine erste Ausnehmung angeordnet, in die der erste Schenkel formschlüssig eingreift.

Weiterhin und bevorzugt in Kombination ist im Plattensitzboden als Anpassung eine zweite Ausnehmung angeordnet, in die der zweite Schenkel formschlüssig eingreift. Wenn eine Schneidkörperunterlage verwendet wird, ist mit dem Plattensitzboden die zur Schneidplatte gewandte Oberseite der Schneidkörperunterlage gemeint.

Der Inkreis des Plattensitzes bzw. der Ausnehmung ist sinnvollerweise um 1 mm bis 20 mm größer ist als der Inkreis der Schneidplatte.

Die Kontur der Plattensitzwand ist in erfinderischer Ausgestaltung an die Kontur der Anlagefläche des Einlegestücks angepasst.

Ebenso ist in erfinderischer Ausgestaltung die Kontur des Plattensitzbodens an die Kontur des Einlegestücks bzw. dessen zweiten Schenkels angepasst.

In Weiterbildung der Erfindung weist das Einlegestück eine erste Winkelform mit einem langen und mit mindestens einem kurzen Schenkel auf. Der lange Schenkel bildet die Anlagefläche und die kurzen Schenkel dienen zur formschlüssigen Befestigung.

Die Dicke des Einlegestücks liegt vorteilhaft zwischen 0,5 und 10 mm und beträgt bevorzugt 2 mm.

In einer erfinderischen Ausgestaltung ist auf der Anlagefläche des Einlegestücks zur Plattensitzwand eine erhabene Feder oder Erhebung angeordnet, die im eingebauten Zustand in eine entsprechend geformte Nut in der Plattensitzwand eingreift. Die Befestigung erfolgt in dieser Ausführung über eine Nut-Feder Verbindung.

Die Oberfläche der Feder oder Erhebung verläuft bevorzugt planparallel, schrägflächig oder halbzylindrisch zur Anlagefläche.

In spezieller Ausgestaltung verläuft die Oberfläche der Feder oder Erhebung in einem Winkel zwischen 1° bis 15° zur Anlagefläche.

Vorteilhaft geht die Feder oder Erhebung über einen Radius in Form eines Halbzylinders in die Anlagefläche über.

Die Höhe der Feder oder Erhebung liegt bevorzugt zwischen 0,1 mm bis 1 mm, die Breite bei 2 mm bis 5 mm und die Länge bei 2 mm bis etwa 80% der Gesamtlänge des Einlegestücks.

Die Breite der Nut in der Plattensitzwand ist in einer Ausgestaltung parallel zur Plattensitzwand, oder schräg auslaufend angewinkelt, oder als senkrecht verlaufender schmaler Halbzylinder ausgebildet.

In einer Ausführungsform ist bei der schrägen Anordnung die schräge Bodenfläche der Nut von der inneren Ecke des Plattensitzes zu den Außenseiten hin abfallend ausgebildet.

Die Breite der Nut ist bevorzugt konstant und verläuft parallel zum Plattensitzboden.

Die Nut-Feder Verbindung ist bevorzugt als Gleit- oder Spielpassung ausgelegt.

Das Einlegestück besteht vorteilhaft aus einem keramischen Werkstoff oder einer Mischkeramik.

In spezieller Ausgestaltung kann das Einlegestück aus Hartmetall oder warmfesten Stählen bestehen.

Bevorzugt ist die Schneidplatte eine Wendeschneidplatte.

Das Einlegestück ist bevorzugt plattenförmig ausgebildet mit zwei parallelen und ebenen Anlageflächen.

Nachfolgend wird die Erfindung anhand von Figuren näher erläutert.

Die Erfindung beschreibt einen neuartigen Plattensitz 1 in Trägerwerkzeugen 2 aller Art (Klemmhalter, Bohrstangen, Systemwerkzeuge, Fräser), welcher zur Aufnahme von Schneidkörpern, im Folgenden allgemein als Schneidplatten 3 bezeichnet. In der Regel sind die Schneidplatten 3 als Wendeschneidplatten ausgebildet.

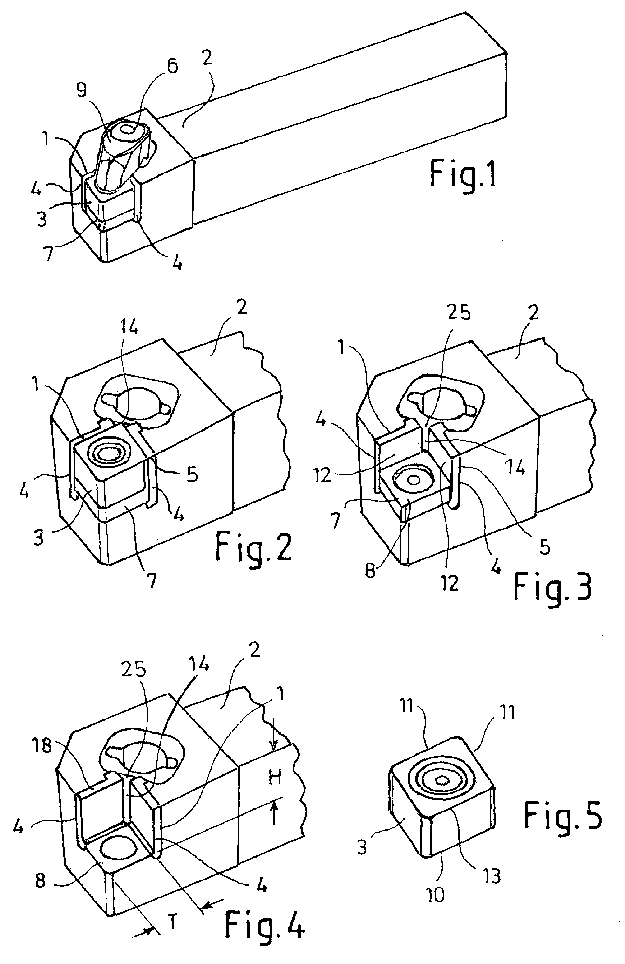

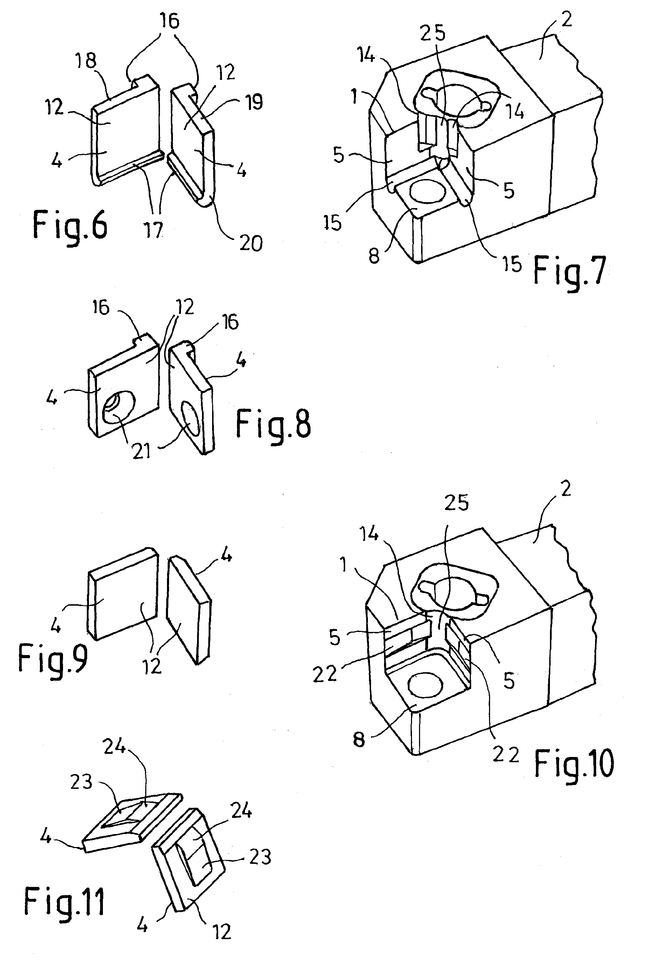

In Fig. 1 ist beispielhaft für ein Trägerwerkzeug 2 ein Klemmhalter dargestellt. Erfinderisches Merkmal des in Fig. 2 vereinfacht und vergrößert dargestellten Trägerwerkzeuges 2 ist die Verwendung speziell geformter Einlegestücke 4, welche sich zwischen den Plattensitzwänden 5 (siehe Figur 7) und der verwendeten Schneidplatte 3 befinden. Gewünschter Vorteil dabei ist eine einfache Auswechselbarkeit der Einlegestücke 4 und die Möglichkeit, den eigentlichen Plattensitz 1, und somit das gesamte Trägerwerkzeug 2, besser vor Verschleiß zu schützen. Durch die Verwendung dieser Einlegestücke 4 wird die Prozessfähigkeit des Trägerwerkzeuges 2 verlängert und verbessert. Die dadurch verlängerte Lebensdauer führt zu einem effizienteren Einsatz des Trägerwerkzeuges 2 und damit zu einer höheren Wirtschaftlichkeit.

Beim heutigen Stand der Technik in der Zerspanung von meist metallischen Werkstoffen werden Trägerwerkzeuge 2 mit darauf befindlichen Schneidplatten 3 oder Wendeschneidplatten genutzt. Dabei wird, wie in Fig. 1 gezeigt, die Schneidplatte 3 auf verschiedenste Weise, z.B. durch ein Spannmittel wie Schrauben 6, Spannpratzen 9 oder Spannkeile in angepassten Ausnehmungen oder Plattensitzen 1 befestigt. Üblicherweise liegt die Unterseite 10 der Schneidplatte 3 direkt auf einer Schneidkörperunterlage 7 oder dem Plattensitzboden 8 auf, dieses ist in den Figuren 2 bis 5 dargestellt. Zudem berühren sich zwei Seitenflächen 11 der Schneidplatte 3 und zwei Plattensitzwände 5 des Plattensitzes 1 miteinander. Diese Berührungsflächen halten die Schneidplatte 3 in ihrer Position und nehmen die beim Zerspanungsvorgang entstehen Schnittkräfte auf.

Beim Abtragen von Material durch das definierte Eindringen der Schneidplattenkante 13 in eine Werkstückoberfläche, entstehen meist hohe Schnittkräfte und Wärme. Diese Schnittkräfte und Wärme wirken auf die Schneidplatte 3 ein und übertragen sich auf die Berührungsflächen im Plattensitz 1 und auf die Schneidkörperunterlage 7. Das ganze Spannsystem ist also permanent wechselnden Kräften und Wärme ausgesetzt, welches dadurch nur einer bestimmten Lebensdauer unterliegt. Die Schneidplatte 3 wird üblicherweise nach einer vorbestimmten Standzeit gedreht und/oder gewendet, je nach Anzahl der Schneidecken mehrfach, bis sie letztendlich durch eine neue Schneidplatte 3 ersetzt wird. Nach gewisser Einsatzzeit tritt auch Verschleiß an der Schneidkörperunterlage 7 und an den Plattensitzwänden 5 selbst auf. Die Schneidkörperunterlage 7 ist meist auch leicht austauschbar, die Plattensitzwände 5 sind nicht auswechselbar. Verschleiß durch Deformation, Abrieb durch Mikroschwingungen oder Ähnliches führt nach gewisser Zeit zwangsläufig zum Austausch des Trägerwerkzeuges 2. Dieses muss dann verschrottet werden. Oftmals kann auch durch Auftragsschweißen und Plattensitznacharbeit ein Trägerwerkzeug 2 wieder einsatzfähig gemacht werden. Die Genauigkeit und Materialfestigkeit des ursprünglichen Werkzeuges 2 kann meist nicht wieder hergestellt werden, zudem ist die Nacharbeitsaktion auch mit hohen Kosten verbunden und kann auch oftmals nicht vom Anwender selbst, sondern nur von einem auf Werkzeugnacharbeit spezialisiertem Fachbetrieb durchgeführt werden.

Das besondere Merkmal dieser in den Fig. 1-10 dargestellten Trägerwerkzeuge 2 mit Einlegestücken 4 ist ein um die Dicke der Einlegestücke 4 vergrößerter Plattensitz 1 mit entsprechenden Nuten oder Anpassungen an den Plattensitzwänden 5 und Anpassungen am Plattensitzboden 8, um die Einlegestücke 4 mit den entsprechend abgestimmten Federn oder Anpassungen aufzunehmen. Der Fachmann kann auch daraus schlussfolgern, dass der Inkreis des Plattensitzes 1 dadurch um 1 mm bis zu 20 mm größer ist, als der Inkreis der verwendeten Schneidplatte 3. Die Wandstärke der Einlegestücke 4 kann also je nach Typ 0,5 mm bis zu 10 mm betragen, wobei sich in den meisten Fällen ein Dicke von etwa 2 mm als besonders geeignet erweist. Die Länge 18 der Einlegestücke 4 entspricht in den meisten Fällen etwas weniger als die Kantenlänge 13 der Schneidplatte 3 und die minimale Höhe entspricht in etwa der Höhe der Schneidplatten, die ggf. noch durch die Höhe einer Schneidkörperunterlage 7 ergänzt wird.

Je nach Type des Einlegestücks 4 gibt es besondere Merkmale zur Befestigung und Sicherung des Einlegestücks 4. Zu bevorzugen ist die besondere zweifache Winkelform des Einlegestücks 4. Die erste Winkelform 19 führt entlang der Schneidplattenkante 13, der lange Schenkel verläuft planparallel zwischen Plattensitzwand 5 und Seitenfläche 11 der Schneidplatte 3. Der kürzere erste Schenkel 16 ragt dabei in eine quer zur Plattensitzwand 5 verlaufende Ausnehmung 14. Das Einlegestück 4 wird dadurch bei eingebauter Schneidplatte 3 am ungewollten Herausrutschen gehindert. Bei der zweiten Winkelform 20 ist der lange Schenkel identisch mit den zum Plattensitzboden 8 führenden Anlageflächen 12 des langen Schenkels aus der ersten Winkelform 19. Hier ist erfindungsgemäß noch ein kurzer zweiter Schenkel 20 angebracht, der dem kurzen ersten Schenkel 16 gegenüber spiegelbildlich und um 90° gedreht angebracht ist. Der kurze zweite Schenkel 17 liegt in einer speziellen zweiten Ausnehmung 15 im Plattensitzboden 8 und wird durch die darüber liegende Schneidkörperunterlage 7 fixiert.

Fehlt anwendungsbedingt eine Schneidkörperunterlage 7 im Plattensitz 1, so fixiert die direkt darüber liegende Schneidplatte 3 die Einlegestücke 4. Erfindungsgemäß bildet in der beschriebenen und bevorzugten Version des Einlegestücks 4 der lange Schenkel die ausgleichende Anlagefläche 12 zwischen Plattensitzwand 5 und Seitenfläche 11 der Schneidplatte 3. Die beiden kurzen Schenkel 16, 17, die in bevorzugter Weise 1 mm bis 5 mm lang sind, fixieren das Einlegestück 4 in seiner Lage in den entsprechenden Ausnehmungen 14 und 15.

Ein weiteres erfinderisches Merkmal dieser Trägerwerkzeuge 2 mit Einlegestücken 4 ist die Materialausführung der Einlegestücke 4. Bevorzugt ist hier ein keramischer Werkstoff gewählt. Der Vorteil der Keramik ist die geringe Wärmeleitfähigkeit und die hohe Druckbeständigkeit. Die Wärme bleibt durch die isolierende Wirkung der Keramik in der Schneidplatte und überträgt sich nicht, oder nur ganz langsam und abgeschwächt auf das Trägerwerkzeug 2. Die Einlegestücke 4 können anwendungsbedingt auch aus Mischkeramik, Hartmetall, warmfesten Stählen oder sonstigem geeignetem Material sein.

Eine heute beliebte Sparmaßnahme in der Zerspanung ist auch das Nachschleifen von gebrauchten Schneidplatten 3. Hierbei werden die Schneidplatten 3 im Umfangs meist um einige zehntel Millimeter nachgeschliffen, bis die beschädigten Schneidkanten und Flächen entfernt sind und die Schneidplatte erneut eingesetzt werden kann. Da dabei der Inkreis der Schneidplatte 3 kleiner wird, wird nicht mehr das bekannte Funktionsmaß des Trägerwerkzeuges 2 erreicht. Zu dieser Vorgehensweise bietet sich hier erfindungsgemäß die Verwendung maßausgleichender Einlegestücke 4 an, dessen Dicke um das an der Schneidplatte abgetragene Material ergänzt ist.

In den Figuren 9 bis 11 ist eine weitere Art und Gestaltungsmöglichkeit dieser erfindungsgemäßen Einlegestücke 4 dargestellt. Hierbei handelt es sich um eine besondere Form von Einlegestücken 4, die wiederum die Anlagefläche 12 als Kontaktfläche zur Seitenfläche 11 der Schneidplatten 3 aufweist. Das besondere Merkmal ist die auf der Rückseite angebrachte Feder oder Erhebung 23. Diese ragt im eingebauten Zustand in eine entsprechend geformte Nut 22 in der Plattensitzwand 5 eines dafür vorbereiteten Plattensitzes 1 eines Trägerwerkzeuges 2. Die Besonderheit dieser Erhebung 23 liegt in seiner äußeren Oberfläche, die parallel zur Anlagefläche 12 verlaufen kann, aber auch in einem Winkel zwischen 1° bis 15° dazu. Für Plattensitze 1 mit bauartbedingten kurzen Plattensitzwänden 5 wird bevorzugt eine schmalere Form dieser Erhebung 23 verwendet. Die schmalere Form besteht nur aus einer Erhebung 23, die durch einen Radius 24 in Form eines Halbzylinders gekennzeichnet ist. Dieses ermöglicht die Unterbringung eben solcher Einlegestücke 4 auf kleinstem Raum.

Die bevorzugte Höhe der beschriebenen Erhebung 23 liegen je nach gewähltem Typ zwischen 0,1 mm bis 1 mm, die Breite bei ca. 2 mm bis 5 mm und die Länge bei ca. 2 mm bis etwa 80% der Gesamtlänge des Einlegestücks 4. Die entsprechende Bodenfläche und verlaufende Breite der Nut 22 in der Plattensitzwand 5 ist dann je nach gefordertem Typ und Erhebung 23 des Einlegestücks 4 parallel zur Fläche der Plattensitzwand 5, oder schräg auslaufend angewinkelt, oder als senkrecht verlaufender schmaler Halbzylinder eingebracht. Ein weiteres besonderes Merkmal bei der schrägen Anordnung ist, dass die schräge Bodenfläche der Nut 22 von der inneren Ecke 25 des Plattensitzes 1 zu den Außenseiten hin abfallend ist. Die Nutbreite ist in beiden Fällen gleich bleibend und parallel zum Plattensitzboden 8 hin angeordnet. Die Nut-Feder Verbindung der Komponenten sollte bevorzugt als Gleit- oder Spielpassung ausgelegt sein.

Wenn die Bauart des Trägerwerkzeuges 2 es erfordert, kann die Befestigung und Fixierung der Einlegestücke 4 auch mittels einer Schraub- oder Stiftbefestigung erfolgen. In Fig. 8 ist ein solches Anlagestück 4 mit eingebrachter durchgehender Bohrung 21 mit einer Senkung für Senkschrauben dargestellt. Das Trägerwerkzeug 2 hat dann in der Plattensitzwand 5 eine geeignete Bohrung mit Gewinde zur Aufnahme der benötigten Befestigungsschraube. Da die Einlagestücke 4 immer rechts und links der Mittelebene eines Plattensitzes 1 an den Plattensitzwänden 5 anzubringen sind, müssen diese in spiegelbildlicher Ausführung vorhanden sein. Dieses gilt erfindungsgemäß auch für alle beschriebenen Plattensitzwand- und Ausnehmungsformen für die Einlegestücke 4.

In der WO 03/013770 A1 ist eine bevorzugte Schneidplatte für das erfindungsgemäße Trägerwerkzeug gezeigt. Diese Schneidplatte ist mit einer Spannmulde versehen, die kreisförmig ausgebildet ist und in der Mitte eine kugel- bzw. kreisförmige Erhebung aufweist. Die Erhebung liegt oberhalb des Muldenbodens und unterhalb der Schneidplattenoberseite. Zum Einspannen auf dem Trägerwerkzeug greift eine Spannpratze oder allgemein ein Halter mit angepasster geformter Nase formschlüssig in die Mulde der Schneidplatte ein. Diese Mulde dient zur formschlüssigen Spannung auf dem Trägerwerkzeug. Besonders für ziehende Schnitte, bei dem die Schneidplatte durch die wirkenden Schnittkräfte aus ihrem Sitz gezogen werden könnte, bietet sich diese Schneidplatte mit der besonderen Mulde an.

EP 1 536 903 B1 beschreibt eine vorteilhafte Weiterbildung der eben beschriebenen Schneidplatte zum Einspannen auf dem Trägerwerkzeug.

Damit Läpp- oder Schleifbearbeitungen der Schneidplattenoberseite die Klemmeigenschaften der Schneidplatte nicht beeinflussen, ist koaxial zur ersten Spannmulde eine zweite Spannmulde angeordnet, wobei die erste Spannmulde tiefer als die zweite Spannmulde und beide tiefer als die Schneidplattenoberseite angeordnet sind. Beim Klemmen dieser Schneidplatte liegt die Spannpratze oder allgemein der Halter des Trägerwerkzeugs auf der zweiten Spannmulde auf und greift zum Beispiel mit einer Nase in die erste Spannmulde ein.

WO 2005/021192 A1 beschreibt eine Schneidplatte aus PCBN oder einem CBN-Verbundwerkstoff, wobei die Schneidplatte eine Spannmulde aufweist. Die Spannmulde kann kreisförmig ausgebildet sein und in der Mitte eine kugel- bzw. kreisförmige Erhebung aufweisen. Die entsprechende Kontur der Spannmulde ist bevorzugt über eine entsprechende Formgebung des Grünkörpers eingebracht und der so hergestellte Grünkörper wird dann getrocknet und gesintert. Auch für das beschriebene erfindungsgemäße Trägerwerkzeug ist eine solche Schneidplatte aus CBN oder PCBN oder einem CBN-Verbundwerkstoff und sein Herstellungsverfahren vorteilhaft.

Die Spannmulde bei Schneidplatten aus CBN oder PCBN oder einem CBN-Verbundwerkstoff kann auch durch Laserbearbeitung eingebracht sein.

Die Schneidplatte kann auch mit einer Beschichtung versehen sein.

## Patentansprüche

1. Trägerwerkzeug (2) zur Aufnahme von Schneidplatten (3) zur spanabhebenden Bearbeitung von metallischen Werkstücken, mit einer als Plattensitz (1) ausgebildeten Ausnehmung mit Plattensitzwänden (5) und einem Plattensitzboden (8) zur Aufnahme der Schneidplatte (3), wobei die Schneidplatte (3) Seitenflächen (11) aufweist, die im Einbauzustand der Schneidplatte (3) auf dem Trägerwerkzeug (2) parallel zu den Plattensitzwänden (5) angeordnet sind und die Schneidplatte (3) durch Spannmittel (9) im Plattensitz (1) befestigbar ist, **dadurch gekennzeichnet, dass** zumindest zwischen einer Plattensitzwand (5) und einer Seitenfläche (11) der Schneidplatte (3) ein austauschbares Einlegestück (4) angeordnet ist.

2. Trägerwerkzeug nach Anspruch 1, **dadurch gekennzeichnet, dass** zwischen jeder Plattensitzwand (5) und Seitenfläche (11) der Schneidplatte (3) ein Einlegestück (4) angeordnet ist.

3. Trägerwerkzeug nach Anspruch 1 oder 2, **dadurch gekennzeichnet, dass** das Einlegestück (4) mit der Plattensitzwand (5) verschraubt ist.

4. Trägerwerkzeug nach Anspruch 3, **dadurch gekennzeichnet, dass** das Trägerwerkzeug (2) in der Plattensitzwand (5) eine Gewindebohrung und das Einlegestück (4) eine durchgehende Bohrung (21) zur Aufnahme einer Befestigungsschraube aufweist.

5. Trägerwerkzeug nach einem der Ansprüche 1 bis 4, **dadurch gekennzeichnet, dass** das Einlegestück (4) Auskragungen und/oder Einbuchtungen aufweist, die in entsprechende Anpassungen in der Plattensitzwand (5) und/oder den Plattensitzboden (8) formschlüssig eingreifen und im montierten Zustand der Schneidkörperunterlage (7) auf dem Trägerwerkzeug (2) ein Herausfallen des Einlegestücks (4) verhindern.

6. Trägerwerkzeug nach Anspruch 5, **dadurch gekennzeichnet, dass** bei Verwendung einer Schneidkörperunterlage (7) zwischen dem Plattensitzboden (8) in der Ausnehmung bzw. im Plattensitz (1) und der Unterseite (10) der Schneidplatte (3), die zur Schneidplatte (3) gewandte Oberseite der Schneidkörperunterlage (7) der Plattensitzboden (8) für die Schneidplatte (3) ist.

7. Trägerwerkzeug nach Anspruch 5 oder 6, **dadurch gekennzeichnet, dass** die Auskragungen am Einlegestück (4) im Wesentlichen senkrecht zur Anlagefläche (12) des Einlegestücks (4) verlaufende Schenkel (16, 17) sind.

8. Trägerwerkzeug nach Anspruch 7, **dadurch gekennzeichnet, dass** ein erster Schenkel (16) sich im Wesentlichen über die Höhe (H) der Ausnehmung erstreckt.

9. Trägerwerkzeug nach Anspruch 7 oder 8, **dadurch gekennzeichnet, dass** ein zweiter Schenkel (17) zum ersten Schenkel (16) spiegelbildlich und um 90° gedreht angebracht ist und sich entlang der Tiefe (T) der Ausnehmung erstreckt.

10. Trägerwerkzeug nach einem der Ansprüche 7 bis 9, **dadurch gekennzeichnet, dass** im Bereich der inneren Ecke (25) der Ausnehmung als Anpassung eine erste Ausnehmung (14) angeordnet ist, in die der erste Schenkel (16) formschlüssig eingreift.

11. Trägerwerkzeug nach einem der Ansprüche 7 bis 10, **dadurch gekennzeichnet, dass** im Plattensitzboden (8) als Anpassung eine zweite Ausnehmung (15) angeordnet ist, in die der zweite Schenkel (17) formschlüssig eingreift.

12. Trägerwerkzeug nach einem der Ansprüche 1 bis 11, **dadurch gekennzeichnet, dass** der Inkreis des Plattensitzes (1) um 1 mm bis 20 mm größer ist als die Kantenlänge (18) der Schneidplatte (3).

13. Trägerwerkzeug nach einem der Ansprüche 1 bis 12, **dadurch gekennzeichnet, dass** die Kontur der Plattensitzwand (5) an die Kontur der Anlagefläche (12) des Einlegestücks (4) angepasst ist.

14. Trägerwerkzeug nach einem der Ansprüche 1 bis 13, **dadurch gekennzeichnet, dass** die Kontur des Plattensitzbodens (8) an die Kontur des Einlegestücks (4) bzw. dessen zweiten Schenkels (17) angepasst ist.

15. Trägerwerkzeug nach einem der Ansprüche 1 bis 14, **dadurch gekennzeichnet, dass** das Einlegestück (4) eine erste Winkelform (19) mit einem langen und mit mindestens einem kurzen Schenkel (16, 17) aufweist.

16. Trägerwerkzeug nach einem der Ansprüche 1 bis 15, **dadurch gekennzeichnet, dass** die Dicke des Einlegestücks (4) zwischen 0,5 mm und 10 mm liegt und bevorzugt 2 mm beträgt.

17. Trägerwerkzeug nach einem der Ansprüche 1 bis 16, **dadurch gekennzeichnet, dass** auf der Anlagefläche (12) des Einlegestücks (4) zur Plattensitzwand (5) eine erhabene Feder oder Erhebung (23) angeordnet ist, die im eingebauten Zustand in eine entsprechend geformte Nut (22) in der Plattensitzwand (5) eingreift.

18. Trägerwerkzeug nach Anspruch 17, **dadurch gekennzeichnet, dass** die Oberfläche der Feder oder Erhebung (23) planparallel, schrägflächig oder halbzylindrisch zur Anlagefläche (12) verläuft.

19. Trägerwerkzeug nach Anspruch 18, **dadurch gekennzeichnet, dass** die Oberfläche der Feder oder Erhebung (23) in einem Winkel zwischen 1° bis 15° zur Anlagefläche (12) verläuft.

20. Trägerwerkzeug nach einem der Ansprüche 17 bis 19, **dadurch gekennzeichnet, dass** die Feder oder Erhebung (23) über einen Radius (24) in Form eines Halbzylinders in die Anlagefläche (12) übergeht.

21. Trägerwerkzeug nach einem der Ansprüche 17 bis 20, **dadurch gekennzeichnet, dass** die Höhe der Feder oder Erhebung (23) zwischen 0,1 mm bis 1 mm, die Breite bei 2 mm bis 5 mm und die Länge bei 2 mm bis etwa 80% der Gesamtlänge des Einlegestücks (4) liegt.

22. Trägerwerkzeug nach einem der Ansprüche 17 bis 21, **dadurch gekennzeichnet, dass** die Breite der Nut (22) in der Plattensitzwand (5) parallel zur Plattensitzwand (5), oder schräg auslaufend angewinkelt, oder als senkrecht verlaufender schmaler Halbzylinder ausgebildet ist.

23. Trägerwerkzeug nach Anspruch 22, **dadurch gekennzeichnet, dass** bei der schrägen Anordnung die schräge Bodenfläche der Nut (22) von der inneren Ecke (25) des Plattensitzes (1) zu den Außenseiten hin abfallend ausgebildet ist.

24. Trägerwerkzeug nach Anspruch 22 oder 23, **dadurch gekennzeichnet, dass** die Breite der Nut konstant ist und parallel zum Plattensitzboden verläuft.

25. Trägerwerkzeug nach einem der Ansprüche 17 bis 24, **dadurch gekennzeichnet, dass** die Nut-Feder Verbindung als Gleit- oder Spielpassung ausgelegt ist.

26. Trägerwerkzeug nach einem der Ansprüche 1 bis 25, **dadurch gekennzeichnet, dass** das Einlegestück (4) aus einem keramischen Werkstoff oder einer Mischkeramik besteht.

27. Trägerwerkzeug nach einem der Ansprüche 1 bis 25, **dadurch gekennzeichnet, dass** das Einlegestück (4) aus Hartmetall oder warmfesten Stählen besteht.

28. Trägerwerkzeug nach einem der Ansprüche 1 bis 27, **dadurch gekennzeichnet, dass** die Schneidplatte eine Wendeschneidplatte ist.

29. Einlegestück (4) zur Verwendung für ein Trägerwerkzeug nach einem der Ansprüche 1 bis 28, **dadurch gekennzeichnet, dass** das Einlegestück (4) plattenförmig ausgebildet ist mit zwei parallelen und ebenen Anlageflächen.
